# EUROPÄISCHE PATENTSCHRIFT

(11) **EP 1 664 572 B1**
(45) Veröffentlichungstag und Bekanntmachung des Hinweises auf die Patenterteilung: **17.10.2007**
(21) Anmeldenummer: 04764269.9
(22) Anmeldetag: 19.08.2004
(51) Int. Cl.: F16D 65/12

(54) **REIBBELAG-LAMELLE**
FRICTION LINING PLATES
DISQUE A GARNITURE DE FRICTION

(30) Priorität: 12.09.2003 DE 10342271
(43) Veröffentlichungstag der Anmeldung: 07.06.2006
(73) Patentinhaber: ZF FRIEDRICHSHAFEN AG, 88038 Friedrichshafen (DE)
(72) Erfinder: EPPLE, Thomas, 88090 Immenstaad (DE); BECKMANN, Jörg, 88048 Friedrichshafen (DE); CAMPANER, Bruno, F-33650 La Brede (FR); DONGES, Andreas, 88079 Kressbronn (DE)
(86) Internationale Anmeldenummer: PCT/EP2004/009284
(87) Internationale Veröffentlichungsnummer: WO 2005/028907

(56) Entgegenhaltungen:
- GB-A- 916 856
- US-A- 2 816 630
- US-A- 4 207 969
- US-A- 6 119 828

## Beschreibung

Die Erfindung betrifft eine Reibbelag-Lamelle für ein naßlaufendes Reibschaltelement, mit mindestens einer ringscheibenartigen, zum Reibeingriff dienenden Reibfläche, die mit Kühlmittel durchströmbare Nuten aufweist, wobei die Nuten zwei sich überlagernde Nutensätze bilden.

Lamellenkupplungen oder Lamellenbremsen umfassen üblicherweise eine Mehrzahl von ringförmigen Lamellen. Dabei ist eine erste Gruppe mit außenverzahnter Lamellen verdrehfest in einem Lamellenträger angeordnet, und eine zweite Gruppe mit innenverzahnten Lamellen verdrehfest auf einer Nabe. In axialer Richtung des Schaltelementes gesehen, greifen die Lamellen der beiden Gruppen verzahnungsartig ineinander. Die beiden Gruppen sind dabei in axialer Richtung relativ zueinander verschiebbar und dabei paarweise in reibschlüssige Verbindung bringbar.

Reibbelag-Lamellen sind üblicherweise sandwichartig aufgebaut, mit einem beispielsweise aus Stahl bestehendem Trägerblech, sowie mit mindestens einem Reibbelag, der auf einer Ringfläche des Trägerblechs angeordnet und im allgemeinen unlösbar mit dem Trägerblech verbunden ist. Der Reibbelag besteht im allgemeinen aus einer Faserstoffmasse, die aus einem papierhaltigen Material hergestellt ist, oder auch aus Carbon.

Praktisch angewendet werden sowohl einseitig als auch beidseitig mit einem Reibbelag belegte Lamellen. Bei einseitig belegten Lamellen arbeiten jeweils zwei einander benachbarte Lamellen zusammen, indem der Reibbelag der einen Lamelle in eingerücktem Zustand des Schaltelementes mit dem Trägerblech der anderen Lamelle in Kontakt gelangt. Bei doppelseitig belegten Lamellen ist jeweils eine doppelseitig belegte Lamelle zwischen zwei benachbarten unbelegten Lamellen angeordnet. Diese glatten, unbelegten Lamellen sind üblicherweise aus Stahl gefertigt.

Bekanntlich entstehen beim Schaltvorgang und insbesondere im Dauerschlupfbetrieb einer derartigen Lamellenkupplung oder Lamellenbremse im Reibflächenkontakt aufgrund der anfallenden Reibarbeit und Reibleistung hohe Temperaturen. Zur Abführung der entsprechend großen Wärmemenge nach außen ist üblicherweise eine Anströmung der Lamellen mit einem geeigneten Kühl- und Schmiermittel - im allgemeinen Ölvorgesehen. Zumeist wird der Kühlölstrom den Lamellen radial von derem Innendurchmesser her zugeleitet und durchströmt das Lamellenpaket durch in dem Reibbelag eingefräste oder eingeprägte Nuten, im allgemeinen von innen nach außen.

Zur Verbesserung der Wärmeabfuhr sind zahlreiche geometrische Ausbildungen für Reibbelag-Nuten bekannt. Als Nutform-Grundmuster seien hier gruppenparallele Nuten, sogenannte Waffelnuten, Radialnuten und Tangentialnuten genannt. Häufig werden verschiedene Nutform-Grundmuster miteinander kombiniert.

So ist aus der US 5,335,765 eine naßlaufende Reibbelaglamelle für eine Automatgetriebe-Kupplung bekannt, bei der zwei in die Reibflächen eingeprägte Nutensätze vorgesehen sind. Die Nuten beider Nutensätze sind auf dem Umfang der Reibfläche symmetrisch verteilt. Jede Nut der beiden Nutensätze erstreckt sich in einem bezüglich der Drehrichtung zur Radialen schräg nach rückwärts geneigten Winkel vom Innenrand der Reibfläche zum Außenrand der Reibfläche. Das Kühlöl zum Wärmeabtransport wird vom Innendurchmesser der Reibflächen her in die Nuten eingebracht. Zur Erzielung eines schnellen Kühlölflusses von innen nach außen ist der Neigungswinkel der Nuten des zweiten Nutensatzes größer als der Neigungswinkel der Nuten des ersten Nutensatzes, wobei jede der zweiten Nuten in eine erste Nut mündet und sich von dieser Stelle aus zum Außendurchmesser der Reibfläche erstreckt. Die ersten und zweiten Nuten "treffen" sich nahe am Innendurchmesser der Reibfläche, wobei der für den Kühlöldurchfluß verfügbare Eintritts-Querschnitt für das Kühlöl radial in die Reibbelaglamelle dem freien Querschnitt der ersten Nuten am Reibflächen-Innendurchmesser entspricht. Der Austritts-Querschnitt für das Kühlöl entspricht der Summe der freien Querschnitte der ersten und zweiten Nuten am Reibflächen-Außendurchmesser und ist in etwa doppelt so groß wie der Kühlöl-Eintritts-Querschnitt. Bezogen auf die Reibbelagfläche ist der Nutanteil insgesamt relativ klein. Entsprechend der Ausrichtung der beiden Nutensätze weist diese Reibbelag-Lamelle eine Vorzugs-Drehrichtung auf und ist ohne funktionelle Einbußen nur in diese eine Drehrichtung betreibbar.

Für die Wandlerüberbrückungskupplung eines Drehmomentwandlers schlägt die DE 44 32 624 C1 einen auf einem axial verschiebbaren Kolben angebrachten Reibbelag vor, der eine Mehrzahl von Nuten bzw. Vertiefungen zum Durchfluß von Kühlöl aufweist, die sich dem radial äußeren und dem radial inneren Rand des Reibbelags in Umfangsrichtung über einen definierten Winkel mit sich änderndem radialen Abstand zur Drehachse des Reibbelags erstrecken. Dabei ändert jede Nut bzw. Vertiefung zwischen je einem Zulauf und einem Ablauf für das Kühlöl seine Erstreckungsrichtung zumindest einmal derart, daß deren Radialkomponente entgegengesetzt zu derjenigen vor der Änderung ausgerichtet ist. Am Umfang verteilt sind am Außendurchmesser des Reibbelags nur wenige Einlässe und am Innendurchmesser des Reibbelags nur wenige Auslässe vorhanden. Die Ein- und Auslässe der Nuten verlaufen dabei senkrecht zur Drehrichtung. Im Nutverlauf jeder Nut vom radial äußeren zum radial inneren Rand des Reibbelags sind im Nutquerschnitt Taschen angeordnet zur Zwischenspeicherung von Kühlöl. Entsprechend erweitert sich der Nutquerschnitt im Nutverlauf abschnittsweise und verjüngt sich anschließend im weiteren Nutverlauf wieder. Der Einlaß- und Auslaß-Querschnitt der einzelnen Nuten ist gleich. Durch diese Nutausbildung soll eine möglichst gleichmäßige Kühlung der Reibbelagfläche erzielt werden, ohne dafür einen vergleichsweise großen Kühlöldurchfluß zu benötigen.

Neben dem Kühlöldurchsatz durch das Lamellenpaket des Reibschaltelementes im Schaltvorgang und im Dauerschlupfbetrieb beeinflußt die geometrische Ausgestaltung der Reibbelag-Nuten auch das Drehschwingungsverhalten des Reibschaltelementes bei der Drehmomentübernahme im Schaltvorgang. Ungeachtet der Drehungleichförmigkeit des Eingangsdrehmomentes des Reibschaltelementes kann ein ungünstiger Verlauf des zwischen den Kontaktflächen der Lamellen wirksamen Reibwerts zu selbsterregten, störenden Drehschwingungen führen. Ein derartiger ungünstiger Reibwertverlauf kann beispielsweise dadurch entstehen, daß es zu einem differenzdrehzahlabhängigen "Aufschwimm-Effekt" zwischen den glatten Lamellenflächen und den Reibbelagflächen kommt, bei Verwendung von beidseitig mit einem Reibbelag belegten Lamellen also zwischen Stahl- und Belaglamellen. Dieser Effekt ist in der Praxis insbesondere bei Lamellenkupplungen bzw. Lamellenbremsen mit hoher Drehmomentkapazität und reibarbeitsbedingt hohem Kühlölbedarf bekannt.

Zur Kompensation derartiger "Aufschwimm-Effekte" schlägt die DE 199 57 511 A1 eine Reibbelag-Lamelle für eine Schaltkupplung vor, bei der zwei verschiedene Nutform-Grundmuster miteinander kombiniert sind. Zum einen weist der auf dem ringförmigen Trägerblech abgebrachte Reibbelag mehrere am Unfang symmetrisch verteilte Nuten auf, die ausgehend von Innendurchmesser des Reibbelags entlang von Radiallinien oder Sekanten verlaufen und relativ tief (bei Bedarf bis zum Trägerblech) in den Reibbelag eingeschnitten sind. Diese Nuten dienen als "Pumpnuten" für das vom Innendurchmesser des Reibbelags her zugeführte Kühlöl und fördern relativ große Kühlölströme und transportieren so einen großen Teil der im Schlupfbetrieb anfallenden Reibungswärme nach außen. Zusätzlich weist der Reibbelag eine zweite Gruppe von Nuten auf, die auf der Reibbelag-Oberfläche nach Art eines Gitters angeordnet und weniger tief in den Reibbelag eingeschnitten sind. Diese "Waffelnutung" überlagert also das Nutbild der "Pumpnuten" und sollen vorrangig überschüssiges Kühlöl und damit hydrodynamische Effekte abbauen, die ein "Aufschwimmen" der Reibbeläge auf dem Ölfilm zur Folge haben würden. Entsprechend sind die Nuten der "Waffelnutung" zahlenmäßig deutlich zahlreicher als die "Pumpnuten" und liegen auch viel dichter nebeneinander, wobei die einzelnen Nuten der "Waffelnutung" jeweils einer von zwei Untergruppen zuzuordnen sind. Die Nuten dieser beiden Untergruppen verlaufen jeweils parallel zueinander, wobei sich die Nuten der beiden Untergruppen unter einem bestimmten Winkel (vorzugsweise 90 Grad) schneiden. Entsprechend der nicht kreissymmetrischen Ausrichtung der "Waffelnutung" ist der freie Nutquerschnitt der einzelnen "Waffelnuten" am Innendurchmesser des Reibbelags, in den das vom Innendurchmesser her zugeführte Kühlöl direkt eintreten kann, eher zufällig. Fertigungstechnisch ist die "Waffelnutung" den "Pumpnuten" überprägt, entsprechend aufwändig ist also die Herstellung einer derartigen Reibbelag-Lamelle.

Reibbelag-Lamellen mit ähnlicher Nutung wie die DE 199 57 511 A1 und Kühlmittelzufuhr vom Innendurchmesser des Reibbelags her sind auch aus der US 2,816,630 und aus der GB 916,856 bekannt. Als konstruktive Besonderheit ist bei beiden Schriften vorgesehen, dass sich beiden überlagernden Nutgruppen mehrfach kreuzen. Bei der Reibbelag-Lamelle gemäß der US 2,816,630 ist zusätzlich vorgesehen, dass am Reibbelag-Innendurchmesser jeweils eine Nut der ersten Nutgruppe in Umfangsrichtung gesehen exakt neben einer Nut der zweiten Nutgruppe nach innen hin austritt, und dass sich im Bereichs des Reibbelag-Außendurchmessers jeweils eine Nut der ersten Nutgruppe mit einer Nut der zweiten Nutgruppe derart schneidet, dass die Nutquerschnittsfläche am Außendurchmesser des Reibbelags deutlich größer ist als die Nutquerschnittsfläche am Innendurchmesser des Reibbelags. Bei der Reibbelag-Lamelle gemäß der GB 916,856 ist vorgesehen, dass sich jeweils eine Nut der ersten Nutgruppe mit einer Nut der zweiten Nutgruppe am Reibbelag-Innendurchmesser schneiden, und dass sich jeweils eine Nut der ersten Nutgruppe mit einer Nut der zweiten Nutgruppe auf einem Durchmesser knapp unterhalb des Reibbelag-Außendurchmessers schneiden, wobei die Nutquerschnittsfläche am Außendurchmesser des Reibbelags und die Nutquerschnittsfläche am Innendurchmesser des Reibbelags in etwa identisch sind.

Der vorliegenden Erfindung liegt die Aufgabe zugrunde, für ein naßlaufendes Reibschaltelement eine Reibbelag-Lamelle zu entwickeln, die einerseits den Abtransport einer großen schlupfbedingten Wärmemenge über ein zugeführtes Kühlmittel nach außen ermöglicht, die andererseits bei der Drehmomentübemahme beim Schließen des Reibschaltelementes drehschwingungsunempfindlich ist. Dabei soll die Reibbelag-Lamelle ohne funktionelle Einbußen drehrichtungsunabhängig einsetzbar und vergleichsweise kostengünstig herstellbar sein.

Erfindungsgemäß gelöst wird die Aufgabe durch eine Reibbelag-Lamelle mit den Merkmalen des Patentanspruchs 1 bzw. des Patentanspruchs 2. Weitere vorteilhafte Ausgestaltungen der Erfindung ergeben sich aus den Unteransprüchen.

Ausgehend vom Stand der Technik ist die erfindungsgemäße Reibbelag-Lamelle für den Einbau in ein naßlaufendes Reibschaltelement vorgesehen und weist zumindest eine ringscheibenartigen, zum Reibeingriff dienende Reibfläche auf. Diese Reibfläche weist mehrere am Umfang verteilte Nuten auf, die zur Wärmeabfuhr mit Kühlmittel an- oder durchströmbar sind. Dabei bilden die Nuten zwei sich überlagernde Nutensätze.

Im eingebauten Zustand rotiert die Reibbelaglamelle ohne Vorzugsdrehrichtung. Das entsprechende Reibschaltelement kann sowohl als Lamellenkupplung als auch als Lamellenbremse ausgebildet sein.

Jede der Nuten des ersten Nutensatzes erstreckt sich in einem bezüglich einer ersten Drehrichtung zur Radialen schräg nach rückwärts geneigten ersten Winkel als Durchgangsnut vom Reibflächen-Innendurchmesser zum Reibflächen-Außendurchmesser. Jede der Nuten des zweiten Nutensatzes erstreckt sich in einem bezüglich der ersten Drehrichtung zur Radialen schräg nach vorwärts geneigten zweiten Winkel als Durchgangsnut vom Reibflächen-Innendurchmesser zum Reibflächen-Außendurchmesser.

In einer ersten erfindungsgemäßen Lösung der Aufgabe wird vorgeschlagen, daß sich jede der Nuten des zweiten Nutensatzes mit einer Nut des ersten Nutensatzes derart schneidet, daß ein erster Nutschnittpunkt am Reibflächen-Innendurchmesser liegt und ein zweiter Nutschnittpunkt am Reibflächen-Außendurchmesser liegt. Dabei ist dann die gesamte Nutquerschnittsfläche am Reibflächen-Innendurchmesser kleiner als die gesamte Nutquerschnittsfläche an einem Reibflächen-Durchmesser zwischen Reibflächen-Innendurchmesser und Reibflächen-Außendurchmesser. Diese erfindungsgemäße Nutung wird mit einer Kühlmittelzufuhr vom Innendurchmesser der Reibfläche her kombiniert.

In einer zweiten erfindungsgemäßen Lösung der Aufgabe wird vorgeschlagen, daß sich jede der Nuten des zweiten Nutensatzes mit einer Nut des ersten Nutensatzes derart schneidet, daß einer erster Nutschnittpunkt am Reibflächen-Außendurchmesser liegt und ein zweiter Nutschittpunkt im Bereich eines mittleren Reibflächen-Durchmessers liegt. Dabei ist dann die gesamte Nutquerschnittsfläche am Reibflächen-Außendurchmesser kleiner als die gesamte Nutquerschnittsfläche an einem Reibflächen-Durchmesser zwischen Reibflächen-Innendurchmesser und Reibflächen-Außendurchmesser. Diese erfindungsgemäße Nutung wird mit einer Kühlmittelzufuhr vom Außendurchmesser der Reibfläche her kombiniert.

Bei beiden Lösungen der Aufgabe weist das erfindungsgemäße Nutbild keine Nutkanten auf, die senkrecht zur Drehrichtung der Reibbelag-Lamelle (d. h. in radialer Richtung) ausgerichtet sind, obwohl alle Nuten beider Nutsätze als Durchgangsnuten vom Innen- zum Außendurchmesser der Reibfläche ausgebildet sind. Hierdurch werden insbesondere die rotatorischen Einflüsse des Kühlmittelflusses innerhalb der Nutung der Reibbelag-Lamelle harmonisiert.

Bei beiden erfindungsgemäßen Lösungen der Aufgabe ist zudem vorgesehen, dass sich jede der Nuten des zweiten Nutensatzes mit einer Nut des ersten Nutensatzes in maximal drei Nutschnittpunkten schneidet. Die Nuten beider Nutensätze können auf dem Umkreis der Reibfläche symmetrisch verteilt sein. Im Resultat ergibt sich ein X-förmiges Nutbild und hinsichtlich Funktion eine besonders günstigere Kombination aus verbleibender (für die Drehmomentübertragung effektiv verfügbarer) Netto-Reibfläche, Reibwertverlauf und Drehschwingungsunempfindlichkeit.

Die erfindungsgemäße Nutausbildungen erzeugt an den neben den Nuten verbleibenden Reibflächenbereiche der Reibbelag-Lamelle einen "Schneepflugeffekt", der das Kühlmittel (in der Regel Öl) aus der Kontaktfläche zwischen Reibfläche und glatter Gegenfläche leicht wegfördert. Da die Nutquerschnittsfläche am Eintritt des Kühlmittels in die Nuten der Reibbelag-Lamelle kleiner ist als die Nutquerschnittsfläche im Bereich der Kontaktfläche zwischen Reibfläche der Reibbelag-Lamelle und glatter Gegenfläche, wird einerseits eine gewisse Sogwirkung für neues radial (von innen oder von außen) anströmendes Kühlmittel erzeugt, andererseits auch ein ausreichend großes freies Nutvolumen zur Aufnahme von Kühlmittel aus der Reibfläche zur Verfügung gestellt. Der bekannte "Aufschwimmeffekt" wird zumindest wirkungsvoll reduziert, ohne dass die für die Drehmomentübertragung effektiv verfügbare Netto-Reibfläche der Reibbelag-Lamelle durch einen großen prozentualen Nutanteil der Reibfläche unerwünscht reduziert werden muß. Der prozentuale Nutanteil der erfindungsgemäßen Reibbelag-Lamelle kann beispielsweise etwa 20 bis 30 % der geometrisch durch Innen- und Außendurchmesser definierten Brutto-Reibfläche betragen.

Weitere Vorteile sind ein günstiger Reibwertverlauf insbesondere beim Schließen des Reibschaltelementes und eine deutlich reduzierte Drehschwingungsneigung im Schlupfbetrieb des Reibschaltelementes.

In einer weiteren Ausgestaltung der Erfindung wird vorgeschlagen, daß die Nuten beider Nutensätze über ihre jeweilige radiale Nut-Erstreckung eine konstante Nutbreite bzw. einen konstanten Nutquerschnitt aufweisen. Vorzugsweise sind dabei die Nutbreite bzw. der Nutquerschnitt der Nuten des ersten Nutensatzes und die Nutbreite bzw. der Nutquerschnitt der Nuten des zweiten Nutensatzes identisch, können jedoch auch verschieden sein. Sind hingegen über der jeweiligen radiale Nut-Erstreckung nicht konstante Querschnitte vorgesehen, so ist stets der Gesamt-Nutquerschnitt an dem Reibflächendurchmesser, an dem das Kühlmittel in die Nuten eingebracht wird, der kleinste Gesamt-Nutquerschnitt aller durchmesserbezogenen Gesamt-Nutquerschnitte.

Prinzipiell ist die erfindungsgemäße Nutausbildung nicht beschränkt auf einen speziellen Reibflächentyp. Die erfindungsgemäße Reibbelag-Lamelle kann sowohl als Sandwich-Konstruktion mit einem (ein Mitnahmprofil aufweisendes) Trägerblech und einem auf dem Trägerblech fest angebrachtem (beispielsweise geklebten) Reibbelag ausgeführt sein, als auch als einteilige Lamelle mit identischem Werkstoff von Trägerblech und Reibbelag. Die Reibbelag-Lamelle kann sowohl als einseitig mit einem Reibbelag belegte Lamelle ausgebildet sein als auch als beidseitig belegte Lamelle. Die Reibbeläge bzw. die Reibflächen können beispielsweise aus papierhaltigen Faserwerkstoffen, Kohlefaserwerkstoffen bzw. Carbon oder Keramikwerkstoffen hergestellt sein.

Im folgenden wird die Erfindung anhand der (einzigen) Figur, in der eine beipielhafte naßlaufende, im eingebauten Zustand rotierende Reibbelag-Lamelle für eine Lamellenkupplung oder Lamellenbremse dargestellt ist, näher erläutert.

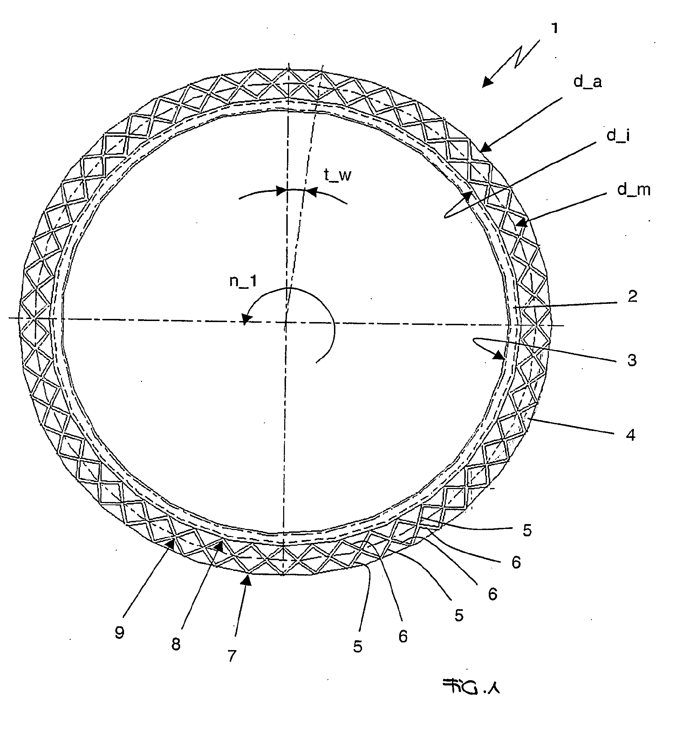

In der Figur mit 1 bezeichnet ist eine beispielhaft in Sandwich-Konstruktion komplettierte Reibbelag-Lamelle, mit einem ringscheibenartigen Trägerblech 2 und einem ebenfalls ringscheibenartigen Reibbelag, der an einer flachen Stirnseite des Trägerblechs 2 fest mit dem Trägerblech verbunden ist, beispielsweise mittels Klebung. Das Trägerblech 2 ist beispielsweise aus Stahl gefertigt und weist ein zur formschlüssigen Verbindung zu einem (hier nicht dargestellten) Lamellenträger dienendes Mitnahmeprofil 3 auf, hier beispielhaft am Innendurchmesser des Trägerblechs 2. Selbstverständlich kann in einer anderen Ausgestaltung der Reibbelag-Lamelle ein entsprechendes Mitnahmeprofil auch am Außendurchmesser des Trägerblechs vorgesehen sein.

Die flache ringscheibenartige Oberseite des Reibbelags bildet die zum Reibeingriff dienende Reibfläche 4 der Reibbelag-Lamelle 1 und ist geometrisch definiert durch einen Außendurchmesser d_a und einen Innendurchmesser d_i. Der sich hieraus ergebene mittlere Durchmesser der Reibfläche 4 ist mit d_m bezeichnet. Als Reibbelag-Werkstoff können beispielsweise papierhaltige Faserwerkstoffe, Kohlefaserwerkstoffe, Carbon oder auch Keramik vorgesehen sein. Die zur Drehmomentübertragung nutzbare "Netto-Reibfläche" der Reibbelag-Lamelle 1 reduziert sich durch Nuten, die in die Reibfläche 4 des Reibbelags eingefräst oder eingeprägt sind. Es sind zwei verschiedene, sich überlagernde Nutensätze vorgesehen. Die Nuten des ersten Nutensatzes sind mit 5 bezeichnet, die Nuten des zweiten Nutensatzes mit 6.

Alle Nuten 5, 6 sind als Durchgangsnuten ausgeführt und erstrecken sich vom Innendurchmesser d_i der Reibfläche 4 bis zum Außendurchmesser d_a der Reibfläche 4. Hierdurch ist ein Kühlmitteltransport vom Innendurchmesser der Reibbelag-Lamelle 1 zu derem Außendurchmesser hin oder umgekehrt gewährleistet, wenn sich die Reibbelag-Lamelle im Reibeingriff befindet, das entsprechende Reibschaltelement sich also im Schlupfbetrieb befindet oder vollständig geschlossen ist.

Jede der Nuten 5 des ersten Nutensatzes erstreckt sich in einem bezüglich einer ersten Drehrichtung n_1 der Reibbelag-Lamelle 1 zur Radialen schräg nach rückwärts geneigten ersten Winkel vom Reibflächen-Innendurchmesser d_i zum Reibflächen-Außendurchmesser d_a, jede der Nuten 6 des zweiten Nutensatzes in einem bezüglich der ersten Drehrichtung n_1 zur Radialen schräg nach vorwärts geneigten zweiten Winkel vom Reibflächen-Innendurchmesser d_1 zum Reibflächen-Außendurchmesser d_a. Dabei weist keine der Nuten 5, 6 eine Nutkante auf, die senkrecht zur Drehrichtung der Reibbelag-Lamelle (d.h. in radialer Richtung) ausgerichtet ist.

In dem dargestellten Ausführungsbeispiel ist für die Nuten 5, 6 eine symmetrische Umfangsteilung vorgesehen, der entsprechende Teilungswinkel ist mit t_w bezeichnet. Ebenfalls beispielhaft anzusehen ist der in der Figur dargestellte Winkel von etwa 45 Grad bezüglich der Drehrichtung n_1 rückwärts bzw. vorwärts zur Radialen. Selbstverständlich kann in anderen Ausführungen auch ein spitzerer oder auch ein stumpferer Winkel vorgesehen sein.

In dem dargestellten Ausführungsbeispiel weisen sowohl die Nuten 5 des ersten Nutensatzes als die Nuten 6 des zweiten Nutensatzes die gleiche und über die radiale Nut-Erstreckung konstante Nutbreite bzw. den gleichen über die radiale Nut-Erstreckung konstanten Nutquerschnitt auf. In anderen Ausführungen kann beispielsweise auch vorgesehen sein, daß die Nuten 5, 6 beider Nutensätze über ihre jeweilige radiale Nut-Erstreckung eine konstante Nutbreite bzw. einen über ihre jeweilige radiale Nut-Erstreckung konstanten Nutquerschnitt aufweisen, die Nutbreite bzw. der Nutquerschnitt der Nuten 5 und 6 jedoch unterschiedlich sind.

Gemäß der Erfindung überlagert der zweite Nutensatz den ersten Nutensatz derart, daß sich spezielle Schnittpunkte der Nuten 6 des zweiten Nutensatzes mit den Nuten 5 des ersten Nutensatzes ergeben. Wie aus der Figur ersichtlich, schneidet sich jede der Nuten 6 des zweiten Nutensatzes mit einer Nut 5 des ersten Nutensatzes derart, daß ein erster Nutschnittpunkt 8 am Reibflächen-Innendurchmesser d_i liegt, und daß ein zweiter Nutschnittpunkt 7 am Reibflächen-Außendurchmesser d_a liegt. Erfindungswesentlich ist, daß dabei die gesamte Nutquerschnittsfläche am Reibflächen-Innendurchmesser d_i bzw. am Reibflächen-Außendurchmesser d_a kleiner ist als die gesamte Nutquerschnittsfläche an einem Reibflächen-Durchmesser zwischen Reibflächen-Innendurchmesser d_i und Reibflächen-Außendurchmesser d_a.

Infolge der symmetrischen Teilung des ersten und zweiten Nutensatzes in Umfangsrichtung schneidet sich jede der Nuten 6 des zweiten Nutensatzes auch mit einer Nut 5 des ersten Nutensatzes im Bereich des mittleren Durchmessers d_m der Reibfläche 4, der entsprechende Schnittpunkt ist mit 9 bezeichnet. In dem dargestellten Ausführungsbeispiel ergibt sich somit ein X-förmiges Nutbild mit symmetrischer Teilung am Umkreis der Reibfläche 4. Diese Symmetrie begünstigt entscheidend, daß die erfindungsgemäße Reibbelag-Lamelle 1 ohne Vorzugsdrehrichtung in beiden Drehrichtungen betreibbar ist.

Weiterhin ist erfindungswesentlich, daß trotz der Überlagerung der beiden Nutensätze im gesamten Nutbild keine senkrecht zur Drehrichtung der Reibbelag-Lamelle (d. h. in radialer Richtung) ausgerichtete Nutkante vorhanden ist.

Der tatsächliche Gesamt-Nutquerschnitt aller Nuten 5, 6 am Innendurchmesser d_i bzw. am Außendurchmesser d_a der Reibfläche 4 ist also stets kleiner als der Gesamt-Nutquerschnitt an einem zwischen Innendurchmesser d_i und Außendurchmesser d_a liegenden Reibflächen-Durchmesser. Somit ist es auch für das in der Figur dargestellte Ausführungsbeispiel unwesentlich, ob die Kühlmittelzufuhr vom Innendurchmesser d_i oder vom Außendurchmesser d_a der Reibfläche 4 her zugeleitet wird.

In der Summe bewirkt die beschriebene Nutausbildung der Reibbelag-Lamelle 1 eine wirkungsvolle Reduzierung des bekannten "Aufschwimmeffektes" und einen sehr günstigen Reibwertverlauf mit einer sehr geringen Drehschwingungsneigung insbesondere beim Schließen und im Schlupfbetrieb des Reibschaltelementes, ohne daß die für die Drehmomentübertragung effektiv verfügbare Netto-Reibfläche durch einen großen prozentualen Nutanteil unerwünscht reduziert werden muß. Insofern eignet sich die erfindungsgemäße Reibbelag-Lamelle 1 besonders für ein in beide Drehrichtungen betreibbares Anfahr-Reibschaltelement in einem Getriebe.

### Bezugszeichen

- 1: Reibbelag-Lamelle
- 2: Trägerblech
- 3: Mitnahmeprofil des Trägerblechs
- 4: Reibfläche des Reibbelags
- 5: Nuten des ersten Nutensatzes
- 6: Nuten des zweiten Nutensatzes
- 7: Schnittpunkt der Nuten am Außendurchmesser des Reibbelags bzw. der Reibfläche
- 8: Schnittpunkt der Nuten am Innendurchmesser des Reibbelags bzw. der Reibfläche
- 9: Schnittpunkt der Nuten am mittleren Durchmesser des Reibbelags bzw. der Reibfläche

- d_a: Außendurchmesser der Reibfläche
- d_i: Innendurchmesser der Reibfläche
- d_m: mittlerer Durchmesser der Reibfläche
- n_1: erste Drehrichtung
- t_w: Teilungswinkel

## Patentansprüche

1. Reibbelag-Lamelle für ein naßlaufendes Reibschaltelement, mit mindestens einer ringscheibenartigen, zum Reibeingriff dienenden Reibfläche (4), die von Reibflächen-Innendurchmesser (di) her mit Kühlmittel durchströmbare Nuten (5, 6) aufweist, wobei
- die Nuten (5, 6) zwei sich überlagernde Nutensätze bilden,
- die Reibbelag-Lamelle (1) im eingebauten Zustand ohne Vorzugsdrehrichtung rotierbar ist,
- die Reibfläche (4) keine senkrecht zur Drehrichtung ausgerichteten Nutkanten aufweist,
- sich jede der Nuten (5) des ersten Nutensatzes in einem bezüglich einer ersten Drehrichtung (n_1) zur Radialen schräg nach rückwärts geneigten ersten Winkel als Durchgangsnut vom Reibflächen-Innendurchmesser (d_i) zum Reibflächen-Außendurchmesser (d_a) erstreckt und
- sich jede der Nuten (6) des zweiten Nutensatzes in einem bezüglich der ersten Drehrichtung (n_1) zur Radialen schräg nach vorwärts geneigten zweiten Winkel als Durchgangsnut vom Reibflächen-Innendurchmesser (d_i) zum Reibflächen-Außendurchmesser (d_a) erstreckt,
**dadurch gekennzeichnet, dass** sich jede der Nuten (6) des zweiten Nutensatzes mit einer Nut (5) des ersten Nutensatzes in maximal drei Nutschnittpunkten schneidet, wobei
- ein erster Nutschnittpunkt (8) am Reibflächen-Innendurchmesser (d_i) liegt,
- ein zweiter Nutschnittpunkt (7) am Reibflächen-Außendurchmesser (d_a) liegt und
- die gesamte Nutquerschnittsfläche am Reibflächen-Innendurchmesser (d_1) kleiner ist als die gesamte Nutquerschnittsfläche an einem Reibflächen-Durchmesser zwischen Reibflächen-Innendurchmesser (d_i) und Reibflächen-Außendurchmesser (d_a).

2. Reibbelag-Lamelle für ein naßlaufendes Reibschaltelement, mit mindestens einer ringscheibenartigen, zum Reibeingriff dienenden Reibfläche (4), die vom Reibflächen-Außendurchmesser (d_a) her mit Kühlmittel durchströmbare Nuten (5, 6) aufweist, wobei
- die Nuten (5, 6) zwei sich überlagernde Nutensätze bilden,
- die Reibbelag-Lamelle (1) im eingebauten Zustand ohne Vorzugsdrehrichtung rotierbar ist,
- die Reibfläche (4) keine senkrecht zur Drehrichtung ausgerichteten Nutkanten aufweist,
- sich jede der Nuten (5) des ersten Nutensatzes in einem bezüglich einer ersten Drehrichtung (n_1) zur Radialen schräg nach rückwärts geneigten ersten Winkel als Durchgangsnut vom Reibflächen-Innendurchmesser (d_i) zum Reibflächen-Außendurchmesser (d_a) erstreckt und
- sich jede der Nuten (6) des zweiten Nutensatzes in einem bezüglich der ersten Drehrichtung (n_1) zur Radialen schräg nach vorwärts geneigten zweiten Winkel als Durchgangsnut vom Reibflächen-Innendurchmesser (d_i) zum Reibflächen-Außendurchmesser (d_a) erstreckt,
**dadurch gekennzeichnet, dass** sich jede der Nuten (6) des zweiten Nutensatzes mit einer Nut (5) des ersten Nutensatzes in maximal drei Nutschnittpunkten schneidet, wobei
- ein erster Nutschnittpunkt (7) am Reibflächen-Außendurchmesser (d_a) liegt,
- ein zweiter Nutschnittpunkt (9) im Bereich eines mittleren Reibflächen-Durchmessers (d_m) liegt und
- die gesamte Nutquerschnittsfläche am Reibflächen-Außendurchmesser (d_a) kleiner ist als die gesamte Nutquerschnittsfläche an einem Reibflächen-Durchmesser zwischen Reibflächen-Innendurchmesser (di) und Reibflächen-Außendurchmesser (d_a).

3. Reibbelag-Lamelle nach Anspruch 2, **dadurch gekennzeichnet, dass** sich jede der Nuten (6) des zweiten Nutensatzes mit einer Nut (5) des ersten Nutensatzes derart schneidet, daß zusätzlich ein dritter Nutschnittpunkt (8) am Reibflächen-Innendurchmesser (d_i) liegt.

4. Reibbelag-lamelle nach Anspruch 1, 2 oder 3, **dadurch gekennzeichnet, dass** die Nuten (5) des ersten Nutensatzes und/oder die Nuten (6) des zweiten Nutensatzes eine über ihre jeweilige radiale Nut-Erstreckung konstante Nutbreite oder einen über ihre jeweilige radiale Nut-Erstreckung konstanten Nutquerschnitt aufweisen.

5. Reibbelag-lamelle nach Anspruch 1, 2 oder 3, **dadurch gekennzeichnet, dass** die Nuten (5) des ersten Nutensatzes und/oder die Nuten (6) des zweiten Nutensatzes eine über ihre jeweilige radiale Nut-Erstreckung nicht konstante Nutbreite oder einen über ihre jeweilige radiale Nut-Erstreckung nicht konstanten Nutquerschnitt aufweisen.

6. Reibbelag-Lamelle nach einem der Ansprüche 1 bis 5, **dadurch gekennzeichnet, dass** die Nuten (5, 6) beider Nutensätze die gleiche Nutbreite bzw. den gleichen Nutquerschnitt aufweisen.

7. Reibbelag-Lamelle nach einem der Ansprüche 1 bis 5, **dadurch gekennzeichnet, dass** die Nuten (5) des ersten Nutensatzes eine andere Nutbreite bzw. einen anderen Nutquerschnitt aufweisen als die Nuten (6) des zweiten Nutensatzes.

8. Reibbelag-Lamelle nach einem der vorigen Ansprüche, **dadurch gekennzeichnet, dass** der gesamte Nutanteil etwa 20 bis 30 % der Reibfläche (4) beträgt.

9. Reibbelag-Lamelle nach einem der vorigen Ansprüche, **dadurch gekennzeichnet, dass** die Nuten (5, 6) des ersten und zweiten Nutensatzes auf dem Umkreis der Reibfläche (4) symmetrisch verteilt sind.

10. Reibbelag-Lamelle nach einem der vorigen Ansprüche, **dadurch gekennzeichnet, dass** die Belag-Lamelle (1) einen Reibbelag bzw. eine Reibfläche (4) aus einem papierhaltigen Faserwerkstoff oder einem Kohlefaserwerkstoff oder einem Keramikwerkstoff aufweist.

11. Reibbelag-Lamelle nach einem der vorigen Ansprüche, **dadurch gekennzeichnet, dass** die Belag-Lamelle (1) als einseitig belegte Lamelle oder als beidseitig belegte Lamelle ausgebildet ist.

## Claims

1. Friction lining plate for a wet-running frictional shift element, with at least one annular disc-type friction surface (4) that serves for frictional engagement and has grooves (5, 6) through which coolant can flow from the inner diameter (d_i) of the friction surface, wherein
- the grooves (5, 6) constitute two overlapping groove sets,
- the friction lining plate (1), when in the integrated state, is rotatable without any preferred direction of rotation,
- the friction surface (4) does not have any groove edges oriented perpendicularly to the direction of rotation,
- each of the grooves (5) of the first groove set extends, as a through-going groove from the inner diameter (d_i) of the friction surface to the outer diameter (d_a) of the friction surface, at a first angle, which is inclined obliquely backwards with respect to a first direction of rotation (n_1) relative to the radial, and
- each of the grooves (6) of the second groove set extends, as a through-going groove from the inner diameter (d_i) of the friction surface to the outer diameter (d_a) of the friction surface, at a second angle, which is inclined obliquely forwards with respect to the first direction of rotation (n_1) relative to the radial,
**characterized in that** each of the grooves (6) of the second groove set intersects a groove (5) of the first groove set at a maximum of three groove intersection points,
- a first groove intersection point (8) lying on the inner diameter (d_i) of the friction surface,
- a second groove intersection point (7) lying on the outer diameter (d_a) of the friction surface, and
- the total groove cross-sectional area at the inner diameter (d_i) of the friction surface being smaller than the total groove cross-sectional area at a friction surface diameter between the inner diameter (d_i) and outer diameter (d_a) of the friction surface.

2. Friction lining plate for a wet-running frictional shift element, with at least one annular disc-type friction surface (4) that serves for frictional engagement and has grooves (5, 6) through which coolant can flow from the outer diameter (d_a) of the friction surface, wherein
- the grooves (5, 6) constitute two overlapping groove sets,
- the friction lining plate (1), when in the integrated state, is rotatable without any preferred direction of rotation,
- the friction surface (4) does not have any groove edges oriented perpendicularly to the direction of rotation,
- each of the grooves (5) of the first groove set extends, as a through-going groove from the inner diameter (d_i) of the friction surface to the outer diameter (d_a) of the friction surface, at a first angle, which is inclined obliquely backwards with respect to a first direction of rotation (n_1) relative to the radial, and
- each of the grooves (6) of the second groove set extends, as a through-going groove from the inner diameter (d_i) of the friction surface to the outer diameter (d_a) of the friction surface, at a second angle, which is inclined obliquely forwards with respect to the first direction of rotation (n_1) relative to the radial,
**characterized in that** each of the grooves (6) of the second groove set intersects a groove (5) of the first groove set at a maximum of three groove intersection points,
- a first groove intersection point (7) lying on the outer diameter (d_a) of the friction surface,
- a second groove intersection point (9) lying in the region of a middle diameter (d_m) of the friction surface, and
- the total groove cross-sectional area at the outer diameter (d_a) of the friction surface being smaller than the total groove cross-sectional area at a friction surface diameter between the inner diameter (d_i) and outer diameter (d_a) of the friction surface.

3. Friction lining plate according to Claim 2,
**characterized in that** each of the grooves (6) of the second groove set intersects a groove (5) of the first groove set in such a manner that,
additionally, a third groove intersection point (8) lies on the inner diameter (d_i) of the friction surface.

4. Friction lining plate according to any one of Claims 1, 2 or 3, **characterized in that** the grooves (5) of the first groove set and/or the grooves (6) of the second groove set have a constant groove width along their respective radial groove extent or constant groove cross-section along their respective radial groove extent.

5. Friction lining plate according to any one of Claims 1, 2 or 3, **characterized in that** the grooves (5) of the first groove set and/or the grooves (6) of the second groove set have a non-constant groove width along their respective radial groove extent or non-constant groove cross-section along their respective radial groove extent.

6. Friction lining plate according to any one of Claims 1 to 5, **characterized in that** the grooves (5, 6) of both groove sets have the same groove width or the same groove cross-section.

7. Friction lining plate according to any one of Claims 1 to 5, **characterized in that** the grooves (5) of the first groove set have a groove width or groove cross-section that differs from that of the grooves (6) of the second groove set.

8. Friction lining plate according to any one of the preceding claims, **characterized in that** the total grooving fraction is approximately 20% to 30 % of the friction surface.

9. Friction lining plate according to any one of the preceding claims, **characterized in that** the grooves (5, 6) of the first and second groove sets are distributed symmetrically around the perimeter of the friction surface (4).

10. Friction lining plate according to any one of the preceding claims, **characterized in that** the lining plate (1) has a friction lining or a friction surface (4) made from a paper-containing fibre material, a carbon fibre material, or a ceramic material.

11. Friction lining plate according to any one of the preceding claims, **characterized in that** the lining plate (1) is realized as a plate lined on one side or as a plate lined on both sides.

## Revendications

1. Disque à garniture de friction pour un élément de commande à friction travaillant à l'état humide, qui comprend au moins une surface de friction (4) du type disque annulaire qui, pour la prise par friction, comporte des rainures (5, 6) pouvant être parcourues par un milieu de refroidissement en partant du diamètre intérieur de la surface de friction (d_i), dans lequel
- les rainures (5, 6) forment deux jeux de rainures qui se superposent,
- à l'état monté, le disque à garniture de friction (1) peut être mis en rotation sans sens de rotation préférentiel,
- la surface de friction (4) ne comporte pas d'arêtes de rainure orientées perpendiculairement à la direction de la rotation,
- chacune des rainures (5) du premier jeu de rainures s'étend selon un premier angle incliné obliquement vers l'arrière relativement à une première direction de rotation (n_1) par rapport à une direction radiale, en constituant une rainure de passage allant du diamètre intérieur (d_i) de la surface de friction jusqu'au diamètre extérieur (d_a) de la surface de friction, et
- chacune des rainures (6) du second jeu de rainures s'étend selon un second angle incliné obliquement vers l'avant relativement à la première direction de rotation (n_1) par rapport à une direction radiale, en constituant une rainure de passage allant du diamètre intérieur (d_i) de la surface de friction au diamètre extérieur (d_a) de la surface de friction,
**caractérisé en ce que** chaque rainure (6) du second jeu de rainures coupe une rainure (5) du premier jeu de rainures en trois points d'intersection de rainures au maximum,
- un premier point d'intersection de rainures (8) se trouvant au diamètre intérieur (d_i) de la surface de friction,
- un second point d'intersection de rainures (7) se trouvant au diamètre extérieur (d_a) de la surface de friction, et
- la surface totale des sections des rainures au diamètre intérieur (d_i) de la surface de friction étant plus petite que la surface totale des sections de rainures à un diamètre de la surface de friction situé entre le diamètre intérieur (d_i) de la surface de friction et le diamètre extérieur (d_a) de la surface de friction.

2. Disque à garniture de friction pour un élément de commande à friction travaillant à l'état humide, comprenant au moins une surface de friction (4) du type disque annulaire qui, pour la prise par friction, comporte des rainures (5, 6) pouvant être parcourues par un milieu de refroidissement en partant du diamètre extérieur (d_a) de la surface de friction, dans lequel
- les rainures (5, 6) forment deux jeux de rainures qui se superposent,
- à l'état monté, le disque à garniture de friction (1) peut être mis en rotation sans direction préférentielle,
- la surface de friction (4) ne comporte pas d'arêtes de rainure orientées perpendiculairement à la direction de la rotation,
- chacune des rainures (5) du premier jeu de rainures s'étend selon un premier angle incliné obliquement vers l'arrière relativement à une première direction de rotation (n_1) par rapport à une direction radiale, en constituant une rainure de passage allant du diamètre intérieur (d_i) de la surface de friction jusqu'au diamètre extérieur (d_a) de la surface de friction, et
- chacune des rainures (6) du second jeu de rainures s'étend selon un deuxième angle incliné obliquement vers l'avant relativement à la première direction de rotation (n_1) par rapport à une direction radiale, en constituant une rainure de passage allant du diamètre intérieur (d_i) de la surface de friction au diamètre extérieur (d_a) de la surface de friction,
**caractérisé en ce que** chaque rainure (6) du second jeu de rainures coupe une rainure (5) du premier jeu de rainures en trois points d'intersection de rainures au maximum,
- un premier point d'intersection de rainures (7) se trouvant au diamètre extérieur (d_a) de la surface de friction,
- un deuxième point d'intersection de rainures (9) se trouvant dans la région d'un diamètre moyen (d_m) de la surface de friction, et
- la surface totale des sections des rainures au diamètre extérieur (d_a) de la surface de friction étant plus petite que la surface totale des sections de rainures à un diamètre de la surface de friction situé entre le diamètre intérieur (d_i) de la surface de friction et le diamètre extérieur (d_a) de la surface de friction.

3. Disque à garniture de friction selon la revendication 2, **caractérisé en ce que** chacune des rainures (6) du second jeu de rainures coupe une rainure (5) du premier jeu de rainures de telle manière qu'en outre, un troisième point d'intersection de rainures (8) se trouve au diamètre intérieur (d_i) de la surface de friction.

4. Disque à garniture de friction selon la revendication 1, 2 ou 3, **carac-térisé en ce que** les rainures (5) du premier jeu de rainures et/ou les rainures (6) du second jeu de rainures présentent une largeur de rainure constante sur toute leur extension radiale respective ou présente une section de rainure constante sur leur extension radiale respective.

5. Disque à garniture de friction selon la revendication 1, 2 ou 3, **caractérisé en ce que** les rainures (5) du premier jeu de rainures et/ou les rainures (6) du second jeu de rainures présentent une largeur de rainure qui n'est pas constante sur leur extension radiale respective, ou présentent une section de rainure non constante sur leur extension radiale respective.

6. Disque à garniture de friction selon l'une des revendications 1 à 5, **caractérisé en ce que** les rainures (5, 6) des deux jeux de rainures présentent la même largeur de rainure, respectivement la même section de rainure.

7. Disque à garniture de friction selon l'une des revendications 1 à 5, **caractérisé en ce que** les rainures (5) du premier jeu de rainures présentent une largeur de rainure, respectivement une section de rainure différente de celle des rainures (6) du second jeu de rainures.

8. Disque à garniture de friction selon une des revendications précédentes, **caractérisé en ce que** la fraction totale représentée par les rainures vaut environ 20 à 30 % de la surface de friction (4).

9. Disque à garniture de friction selon l'une des revendications précédentes, **caractérisé en ce que** les rainures (5, 6) du premier jeu de rainures et du second jeu de rainures sont réparties symétriquement sur la circonférence de la surface de friction (4).

10. Disque à garniture de friction selon l'une des revendications précédentes, **caractérisé en ce que** le disque à garniture (1) présente une garniture de friction ou une surface de friction (4) faite d'une matière fibreuse contenant du papier, ou une matière de fibres de carbone ou une matière céramique.

11. Disque à garniture de friction selon l'une des revendications précédentes, **caractérisé en ce que** le disque à garniture (1) est constitué par un disque garni sur une face ou par un disque garni sur les deux faces.
